# EUROPÄISCHE PATENTANMELDUNG

(11) **EP 3 839 370 A1**
(43) Veröffentlichungstag der Anmeldung: **23.06.2021**
(21) Anmeldenummer: 20020489.9
(22) Anmeldetag: 22.10.2020
(51) Int. Cl.: F24S 25/615, H02S 20/23

(54) **VORRICHTUNG ZUM BEFESTIGEN VON SOLARPANEELEN**

(30) Priorität: 16.12.2019 AT 14519 U
(71) Anmelder: Prefa Aluminiumprodukte Gesellschaft m.b.H., 3182 Markt/Lilienfeld (AT)
(72) Erfinder: Ried, Walter, A-3182 Marktl (AT)
(74) Vertreter: Keschmann, Marc

(57) **Zusammenfassung**

Bei einer Vorrichtung zum Befestigen von Solarpaneelen an einem Stehfalz (15) einer Dacheindeckung, umfassend zwei Klemmbacken (2,3) und Klemmmittel, wie z.B. wenigstens eine Schraube (8), zum Festklemmen der Klemmbacken (2,3) am Stehfalz (15), weisen die Klemmbacken (2,3) sich in entgegengesetzte Richtungen seitlich weg erstreckende Stützfüße (4) auf, die zu beiden Seiten des Stehfalzes (15) zur Auflage auf der Dacheindeckung (18) ausgebildet sind, wobei wenigstens eine der Klemmbacken (3) eine Montageplatte (5) zum Montieren eines Solarpaneels aufweist und wobei die Klemmbacken (2,3) an ihrer dem Stehfalz (15) zugewandten Innenseite nach innen vorstehende Klemmstege (16,17) aufweisen.

## Beschreibung

Die Erfindung betrifft eine Vorrichtung zum Befestigen von Solarpaneelen an einem Stehfalz einer Dacheindeckung, umfassend zwei Klemmbacken und Klemmmittel, wie z.B. wenigstens eine Schraube, zum Festklemmen der Klemmbacken am Stehfalz.

Metalldeckungen stellen eine sehr langlebige und zumeist wartungsfreie Dacheindeckung bereit. Metalldeckungen eigenen sich vor allem bei flachen Dachneigungen, lassen sich aber auch bei stärkerer Neigung und als Wandbekleidung verwenden. Metalldeckungen können auch auf gebogenen oder geschwungenen Dächern eingesetzt werden.

Metalldeckungen besteht meist aus Metallbahnen, die mittels eines Falzes miteinander verbunden werden. Hierbei stellt die Doppelstehfalzdeckung eine der gängigsten Metalldachdeckungen dar. Das Doppelstehfalzdach besteht aus Scharen (Metallbahnen) mit seitlichen Aufkantungen, die mit der danebenliegenden Aufkantung doppelt verfalzt werden. Hierbei entsteht eine Falzhöhe von z.B. 23 - 30 mm oder mehr. Als Unterkonstruktion wird zumeist eine hinterlüftete Holzschalung mit Trennlage eingebaut.

Die zwischen benachbarten Metallbahnen angeordneten Stehfalze verlaufen in der Regel parallel zueinander und eignen sich zur Befestigung von Bauelementen auf dem Dach, wie z.B. zur Befestigung von Solarpaneelen.

Um eine zerstörungsfreie Befestigung an der Dacheindeckung zu ermöglichen, sind Befestigungsvorrichtungen bekannt geworden, welche am Stehfalz festgeklemmt werden. Solche Befestigungsvorrichtungen umfassen zwei Klemmbacken und Klemmmittel, wie z.B. wenigstens eine Schraube, zum Festklemmen der Klemmbacken am Stehfalz.

Die vorliegende Erfindung zielt darauf ab, bekannte Befestigungs- bzw. Klemmvorrichtungen dahingehend zu verbessern, dass eine stabilere und sichere Befestigung erreicht wird.

Zur Lösung dieser Aufgabe stellt die Erfindung eine Vorrichtung zum Befestigen von Solarpaneelen an einem Stehfalz einer Dacheindeckung bereit, umfassend zwei Klemmbacken und Klemmmittel, wie z.B. wenigstens eine Schraube, zum Festklemmen der Klemmbacken am Stehfalz, wobei die Klemmbacken sich in entgegengesetzte Richtungen seitlich weg erstreckende Stützfüße aufweisen, die zu beiden Seiten des Stehfalzes zur Auflage auf der Dacheindeckung ausgebildet sind, wobei wenigstens eine der Klemmbacken eine Montageplatte zum Montieren eines Solarpaneels aufweist, und wobei die Klemmbacken an ihrer dem Stehfalz zugewandten Innenseite nach innen vorstehende Klemmstege aufweisen.

Dadurch, dass die Klemmbacken sich in entgegengesetzte Richtungen seitlich weg erstreckende Stützfüße aufweisen, die zu beiden Seiten des Stehfalzes zur Auflage auf der Dacheindeckung ausgebildet sind, wird eine erhöhte Stabilität der Befestigungsvorrichtung erreicht, weil die Befestigungsvorrichtung zusätzlich zur Klemmung am Stehfalz auch eine beidseitige Abstützung an der Dacheindeckung ermöglicht. Dies verhindert zuverlässig ein Verkippen der Befestigungsvorrichtung relativ zum Dach.

Dadurch, dass die Klemmbacken an ihrer dem Stehfalz zugewandten Innenseite nach innen vorstehende Klemmstege aufweisen, wird zusätzlich eine verbesserte Klemmwirkung erzielt. Die Klemmstege bilden hierbei örtlich begrenzte Kontaktbereiche aus, entlang der die Klemmbacken an beiden Seiten des Stehfalzes mit diesem zusammenwirken. Die auf die Klemmbacken ausgeübte Klemmkraft wird daher über eine geringere Kontaktfläche auf den Stehfalz übertragen, sodass im Kontaktbereich eine höhere Kraft wirkt und die Klemmwirkung verbessert wird. Gegebenenfalls werden die Klemmstege auf Grund der höheren kontaktflächenbezogenen Kraft in das Material des Stehfalzes eingedrückt, was eine weitere Maßnahme gegen ein unbeabsichtigtes Verrutschen der Befestigungsvorrichtung relativ zum Stehfalz mit sich bringt.

Die Anzahl der Klemmstege kann grundsätzlich frei gewählt werden. Die Erfindung umfasst hierbei Ausführungen mit wenigstens einem Klemmsteg je Klemmbacke. Die Erfindung umfasst auch Ausführungen, bei denen wenigstens eine der Klemmbacken mehr als einen Klemmsteg aufweist. Die beiden Klemmbacken können die gleiche Anzahl an Klemmstegen aufweisen oder eine voneinander verschiedene Anzahl an Klemmstegen.

Gemäß einer bevorzugten Ausführung der Erfindung ist wenigstens ein Klemmsteg der einen Klemmbacke in Bezug auf wenigstens zwei Klemmstege der anderen Klemmbacke versetzt oder auf Lücke angeordnet. Das versetzte Angreifen von bezüglich des Stehfalzes gegenüberliegenden Klemmstegen kann bei entsprechenden Klemmkräften zu einer im Wesentlichen S-förmigen oder wellenförmigen Verformung des Stehfalzes führen, was zu einer weiteren Verbesserung der Klemmwirkung führt. Bevorzugt trägt die eine Klemmbacke hierbei eine gerade und die andere Klemmbacke eine ungerade Anzahl von Klemmstegen. Insbesondere trägt die eine Klemmbacke einen einzigen Klemmsteg und die andere Klemmbacke zwei Klemmstege, wobei der eine Klemmsteg der einen Klemmbacke zwischen den beiden Klemmstegen der anderen Klemmbacke angeordnet ist. In diesem Fall wird durch die Anordnung der Klemmstege eine vorgegebene Einbaurichtung der Befestigungsvorrichtung definiert, wobei die mit dem einen einzigen Klemmsteg ausgestattete Klemmbacke an der Seite des Stehfalzes angeordnet wird, auf welche die Aufkantungen der benachbarten Metallbahnen zur Ausbildung des Stehfalzes umgebogen wurden.

Bevorzugt ist vorgesehen, dass die Klemmstege sich im Wesentlichen über die gesamte Länge der Klemmbacke erstrecken. Die Klemmstege können hierbei durchgehend ausgebildet sein oder Unterbrechungen aufweisen.

Eine weitere bevorzugte Ausbildung sieht vor, dass die Klemmstege zueinander parallel verlaufen.

Bei aus Metallbahnen bestehenden Dacheindeckungen, insbesondere Doppelstehfalzdeckungen, erfolgt die Befestigung der Metallbahnen auf der Unterkonstruktion meist mittels sog. Haften. Die Hafte bilden unterhalb der Metallbahnen direkt neben dem Stehfalz Erhöhungen aus, welche Ausbeulungen in der Metallbahn bewirken. Zur Vermeidung solcher Ausbeulungen sind Metallbahnen bekannt, die an den Positionen der Hafte eine Freistellung (sog. Haftfreistellung) aufweisen, d.h. in diesem Bereich eine vorgeformte Erhöhung aufweisen, die einen Freiraum für die Hafte schaffen.

Gemäß einer bevorzugten Weiterbildung der vorliegenden Erfindung wird eine besondere Formgebung der Stützfüße geschaffen, welche den für die Anordnung einer Haftfreistellung erforderlichen Raum freilassen. Dabei weisen die Stützfüße im Bereich ihrer freien Enden jeweils einen Auflagebereich zur Auflage auf der Dacheindeckung auf, um seitlich des Stehfalzes jeweils eine Freistellung zwischen den Stützfüßen und der Dacheindeckung auszubilden.

Insbesondere kann hierbei vorgesehen sein, dass die Stützfüße im Bereich ihrer freien Enden eine Kröpfung aufweisen.

Um eine Beschädigung oder ein Durchscheuern der Metallbahnen zu vermeiden, weisen die Stützfüße im Bereich ihrer freien Enden bevorzugt Auflageelemente auf. Bevorzugt bestehen die Auflageelemente aus einem elastischen Material, wie z.B. aus einem Ethylen-Propylen-DienKautschuk.

Was die Ausführung der Klemmmittel zum Festklemmen der Klemmbacken am Stehfalz betrifft, sieht eine bevorzugte Ausführung vor, dass die Klemmbacken jeweils wenigstens ein Durchgangsloch für eine Schraube zum Festklemmen der Klemmbacken aufweisen.

Die Klemmbacken können den Rand des Durchgangslochs umgebend jeweils eine Auflagefläche für die Schraube bzw. eine mit der Schraube zusammenwirkende Schraubenmutter aufweisen, wobei die Auflageflächen der Klemmbacken parallel zueinander, und vorzugsweise parallel zu einer Mittelebene der Vorrichtung, verlaufen. Die genannte Parallelität kann z.B. durch eine lokale Materialverstärkung der Klemmbacken erreicht werden.

Da Solarpaneele oder andere am Dach zu befestigende Elemente auf Grund ihrer Großflächigkeit mit einer Vielzahl von erfindungsgemäße Befestigungsvorrichtungen zu befestigen sind, ist es vorteilhaft, Justierungsmöglichkeiten vorzusehen, um Ungenauigkeiten bei der Montage ausgleichen zu können. Insbesondere soll eine Justierung dergestalt ermöglicht werden, dass die Montageelemente der Befestigungsvorrichtungen auf eine gemeinsame Ebene eingestellt werden können. Eine bevorzugte Ausbildung der erfindungsgemäßen Befestigungsvorrichtung sieht in diesem Zusammenhang vor, dass die Montageplatte ein Langloch für die Befestigung des Solarpaneels aufweist. Das Langloch ermöglichst eine Feinjustierung in Richtung der Längserstreckung des Stehfalzes.

Weiters kann bevorzugt vorgesehen sein, dass die Vorrichtung eine durch das Langloch verlaufende Gewindestange aufweist. Durch die Gewindestange wird ein Höhenausgleich ermöglicht, um Unebenheiten der Unterkonstruktion des Daches ausgleichen zu können.

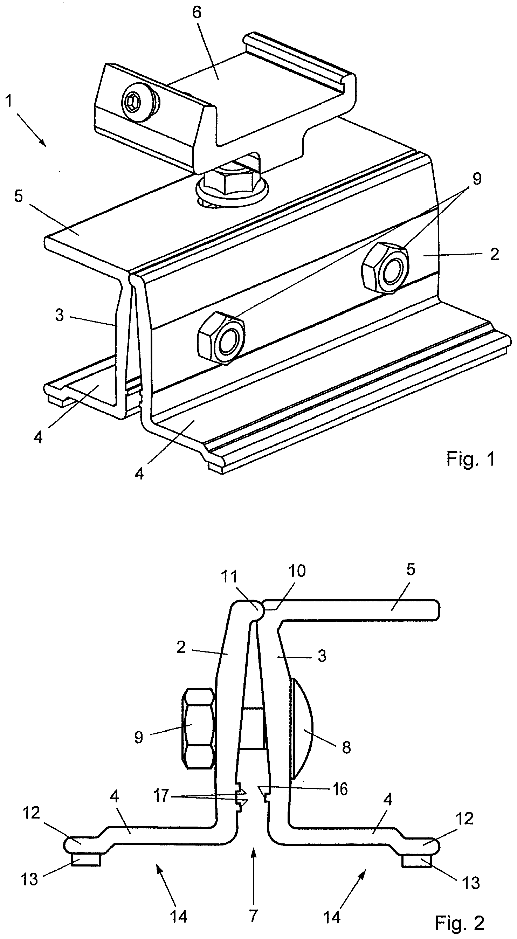

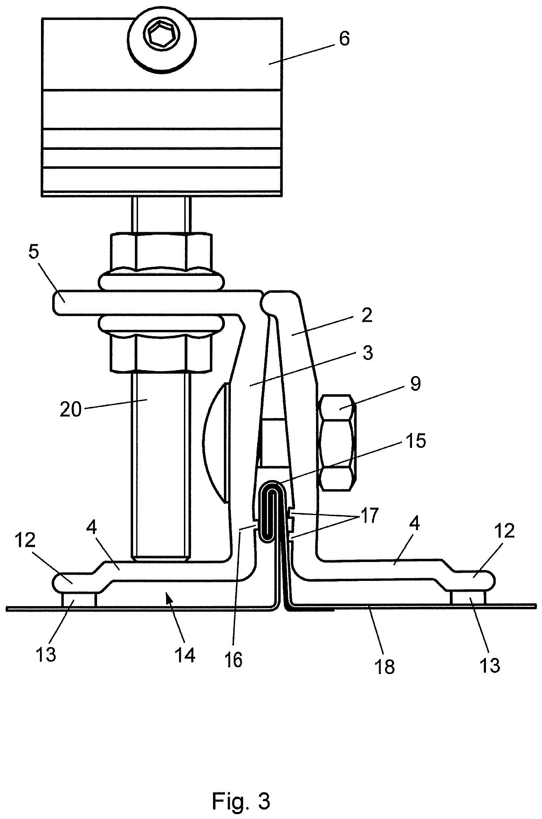

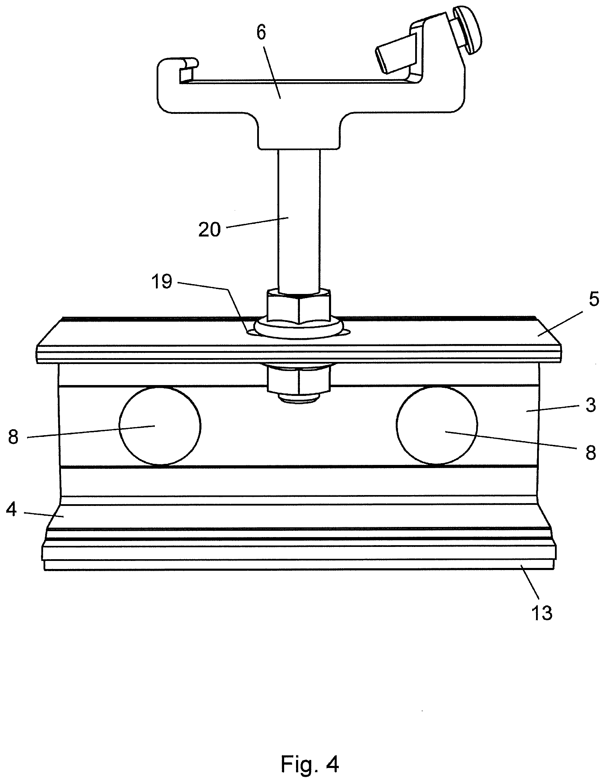

Die Erfindung wird nachfolgend anhand eines in der Zeichnung dargestellten Ausführungsbeispiels näher erläutert. In dieser zeigen Fig. 1 eine perspektivische Ansicht der Befestigungsvorrichtung, Fig. 2 eine Frontalansicht der Befestigungsvorrichtung gemäß Fig. 1, Fig. 3 die Anordnung der Befestigungsvorrichtung gemäß Fig. 1 an einem Stehfalz und Fig. 4 eine Seitenansicht einer Klemmbacke.

In Fig. 1 ist die Befestigungsvorrichtung allgemein mit 1 bezeichnet. Die Befestigungsvorrichtung 1 umfasst eine erste Klemmbacke 2 und eine zweite Klemmbacke 3, die sich in entgegengesetzte Richtungen seitlich weg erstreckende Stützfüße 4 aufweisen. Die zweite Klemmbacke 3 ist mit einer im Wesentlichen rechtwinkelig zu dieser verlaufenen Montageplatte 5 versehen, auf welcher ein Ankopplungselement 6 montiert ist, welches die Verbindung zu einem Solarpaneel herstellt.

In der Frontalansicht gemäß Fig. 2 ist ersichtlich, dass der Zwischenraum 7 zwischen den Klemmbacken 2,3 dem Einklemmen eines Stehfalzes dient. Die erforderliche Klemmkraft wird durch Festziehen einer von einem Schraubbolzen 8 und einer Schraubenmutter 9 gebildeten Schraubenverbindung aufgebracht. Dabei weisen die Klemmbacken 2,3 im Bereich des Durchgangsloches für den Schraubbolzen 8 eine Materialverdickung auf, damit die Auflageflächen für den Kopf des Schraubbolzens 8 und für die Schraubenmutter 9 parallel zueinander verlaufen.

Zur gegenseitigen Positionierung bzw. Führung der beiden Klemmbacken 2,3 ist die zweite Klemmbacke 3 mit einer Ausnehmung 10 ausgebildet, in welche ein an der ersten Klemmbacke 2 ausgebildeter Vorsprung 11 scharnierartig eingreift.

Die Stützfüße 4 weisen im Bereich ihrer freien Enden jeweils einen Auflagebereich 12 zur Auflage auf der Dacheindeckung auf, um seitlich des Stehfalzes jeweils eine Freistellung 14 zwischen den Stützfüßen und der Dacheindeckung auszubilden. Zu diesem Zweck sind die Stützfüße im Bereich ihrer freien Enden mit einer Kröpfung ausgebildet. Im Bereich ihrer freien Enden weisen die Stützfüße 4 Auflageelemente 13 auf, die z.B. aus einem elastischen Material bestehen.

Wie in der Darstellung gemäß Fig. 3 gezeigt, wird ein Stehfalz 15 zwischen den Klemmbacken 2,3 eingeklemmt, wobei die erste Klemmbacke 2 zwei Klemmstege 17 und die zweite Klemmbacke 3 einen Klemmsteg 16 aufweist. Die Klemmstege 16 und 17 sind hierbei versetzt bzw. auf Lücke angeordnet. Weiters ist ersichtlich, dass sich die Auflagebereiche 12 der Stützfüße 4 auf der schematisch dargestellten Dacheindeckung 18 abstützen.

Wie in Fig. 4 dargestellt, ist die Montageplatte 5 mit einem Langloch 19 versehen, welches der Aufnahme einer Gewindestange 20 dient. Die Gewindestange 20 verbindet die Montageplatte 5 mit einem Ankopplungselement 6, wobei die Höheneinstellung des Ankopplungselements 6 mittels der Gewindestange 20 erfolgt.

## Patentansprüche

1. Vorrichtung zum Befestigen von Solarpaneelen an einem Stehfalz (15) einer Dacheindeckung, umfassend zwei Klemmbacken (2,3) und Klemmmittel, wie z.B. wenigstens eine Schraube (8), zum Festklemmen der Klemmbacken (2,3) am Stehfalz (15), wobei die Klemmbacken (2,3) sich in entgegengesetzte Richtungen seitlich weg erstreckende Stützfüße (4) aufweisen, die zu beiden Seiten des Stehfalzes (15) zur Auflage auf der Dacheindeckung (18) ausgebildet sind, wobei wenigstens eine der Klemmbacken (3) eine Montageplatte (5) zum Montieren eines Solarpaneels aufweist und wobei die Klemmbacken (2,3) an ihrer dem Stehfalz (15) zugewandten Innenseite nach innen vorstehende Klemmstege (16,17) aufweisen.

2. Vorrichtung nach Anspruch 1, **dadurch gekennzeichnet, dass** wenigstens ein Klemmsteg (16) der einen Klemmbacke (3) in Bezug auf wenigstens zwei Klemmstege (17) der anderen Klemmbacke (2) versetzt oder auf Lücke angeordnet ist.

3. Vorrichtung nach Anspruch 1 oder 2, **dadurch gekennzeichnet, dass** die Klemmstege (16,17) sich im Wesentlichen über die gesamte Länge der Klemmbacke (2,3) erstrecken.

4. Vorrichtung nach Anspruch 1, 2 oder 3, **dadurch gekennzeichnet, dass** die Klemmstege (16,17) zueinander parallel verlaufen.

5. Vorrichtung nach einem der Ansprüche 1 bis 4, **dadurch gekennzeichnet, dass** die Stützfüße (4) im Bereich ihrer freien Enden jeweils einen Auflagebereich (12) zur Auflage auf der Dacheindeckung (18) aufweisen, um seitlich des Stehfalzes (15) jeweils eine Freistellung (14) zwischen den Stützfüßen (4) und der Dacheindeckung (18) auszubilden.

6. Vorrichtung nach Anspruch 5, **dadurch gekennzeichnet, dass** die Stützfüße (4) im Bereich ihrer freien Enden eine Kröpfung aufweisen.

7. Vorrichtung nach Anspruch 5 oder 6, **dadurch gekennzeichnet, dass** die Stützfüße (4) im Bereich ihrer freien Enden insbesondere elastische Auflageelemente (13) aufweisen.

8. Vorrichtung nach einem der Ansprüche 1 bis 7, **dadurch gekennzeichnet, dass** die Klemmbacken (2,3) jeweils wenigstens ein Durchgangsloch für eine Schraube (8) zum Festklemmen der Klemmbacken (2,3) aufweisen.

9. Vorrichtung nach Anspruch 8, **dadurch gekennzeichnet, dass** die Klemmbacken (2,3) den Rand des Durchgangslochs umgebend jeweils eine Auflagefläche für die Schraube (8) bzw. eine mit der Schraube (8) zusammenwirkende Schraubenmutter (9) aufweisen, wobei die Auflageflächen der Klemmbacken (2,3) parallel zueinander, und vorzugsweise parallel zu einer Mittelebene der Vorrichtung, verlaufen.

10. Vorrichtung nach einem der Ansprüche 1 bis 9, **dadurch gekennzeichnet, dass** die Montageplatte (5) ein Langloch (19) für die Befestigung des Solarpaneels aufweist.

11. Vorrichtung nach Anspruch 10, **dadurch gekennzeichnet, dass** die Vorrichtung weiters eine durch das Langloch (19) verlaufende Gewindestange (20) aufweist.
